# NEW EUROPEAN PATENT SPECIFICATION

(11) **EP 2 364 933 B2**
(45) Date of publication and mention of the opposition decision: **11.11.2015**
(45) Mention of the grant of the patent: 05.12.2012
(21) Application number: 11157152.7
(22) Date of filing: 07.03.2011
(51) Int. Cl.: B65G 1/04

(54) **System for distributing goods**
System zur Verteilung von Gütern
Système pour la distribution de marchandises

(30) Priority: 12.03.2010 NL 2004389
(43) Date of publication of application: 14.09.2011
(73) Proprietor: Vanderlande Industries B.V., 5466 RB Veghel (NL)
(72) Inventor: Vissers, Johannes Petrus Maria, 5616 GT, EINDHOVEN (NL)
(74) Representative: Algemeen Octrooi- en Merkenbureau B.V.

(56) References cited:
- WO-A1-2008/022767
- WO-A1-2008/089980

## Description

The present invention relates to a system for distributing products, which system comprises a plurality of racks with tray storage positions disposed above and beside each other for the temporary storage of trays carrying a single layer of products, a number of transfer devices for unloading pallets and loading trays in a single layer, and a tray conveying system for conveying trays loaded by a transfer device to a tray storage position, which tray conveying system comprises a number of lifts.

Such a system, which is described in International patent application WO 2008/089980 A1, forms part of a so-called "warehouse and distribution" system, in which various products are collected in an automated manner in accordance with corresponding orders. Products to be collected are made available for collection by presenting products for collection in rack positions. Each tray storage position only contains one type of product present on a tray in said tray storage position, on which tray only one layer of the products in question is present.

The present invention in particular relates to the supply of trays loaded with a single layer of products to the various tray storage positions. The products in question are usually from pallets on which the products are stacked in several layers. Said pallets are unloaded at one or a number of transfer stations, and trays are loaded with a single layer. The loaded trays are then conveyed to a tray storage position, where the products present on the trays in a single layer are presented for collection in accordance with corresponding orders.

With the system according to WO 2008/089980, a single distribution conveyor system for the trays is used for conveying the loaded trays from the transfer devices to the tray storage positions, which system comprises an endless conveying path which extends along short ends of racks disposed parallel to each other. The system further comprises a number of branch conveyors, which branch off said single distribution conveyor system between racks disposed adjacent to each other. The branch conveyors extend between said adjacent racks, along the entire length thereof. Also provided between the racks, on both sides of the branch conveyor, are lifts which are movable along the racks, which lifts take over loaded trays from the branch conveyors and place said loaded trays in a tray storage position. Partially because of the relative unwieldiness of the trays to be conveyed, the conveying system for the trays is relatively unwieldy as well, so that the capacity is limited. Said limited capacity might lead to the racks being insufficiently supplied. To provide a solution to this problem, the system according to WO 2008/089980 makes use of so-called conveying units. Said conveying units can be regarded as small racks comprising (only) tray storage positions disposed above each other, which can be moved by the single distribution conveyor system and by the branch conveyors. By making use of such conveying units, the capacity or, in other words, the number of trays that can be conveyed per unit time by the tray conveying system, is increased, and that with approximately a factor equal to the number of trays with which a conveying unit can be loaded.

The object of the present invention is to obviate the need to use such conveying units and nevertheless achieve, using limited conveying means, that the racks will be sufficiently supplied with loaded trays, whilst in addition maintaining a high degree of flexibility regarding the possible tray storage positions that can be reached by trays independently of the question by which transfer device the tray in question has been loaded. In order to accomplish that object, the invention is characterised by the characterizing features of claim 1. Loaded trays intended for tray storage positions of racks associated with a group of a number of racks disposed adjacent to each other, along short ends of which the endless conveying path of the distribution conveyor subsystem extends, can thus be supplied to said tray storage positions via the distribution conveyor subsystem in question. The number of racks that can thus be served via the distribution conveyor subsystem in question can be geared to the capacity of the distribution conveyor subsystem in question. The transfer means thus achieve that trays, once they have been supplied to a distribution conveyor subsystem after being loaded by a transfer device, will not necessarily end up at a tray storage position of a rack along the short end of which the conveying path of the distribution conveyor subsystem extends, because it is also possible, by having the transfer means of a distribution conveyor subsystem transfer a loaded tray to another distribution conveyor subsystem, if necessary, to reach a tray storage position associated with the other distribution conveyor subsystem.

In particular, but not exclusively, if according to another embodiment the tray conveying system comprises at least three distribution conveyor subsystems, it is preferable if the transfer means comprise vertical moving means for moving a loaded tray upward from a pickup position and for moving the loaded tray downward at a delivery position. Thus it is possible to move a loaded tray by lifting it over other conveying paths without affecting the functioning of the distribution conveyor subsystem being passed.

For constructional reasons it is preferable in that case if the transfer means comprise horizontal moving means for moving the vertical moving means in horizontal direction from a position above a pickup position to a position above a delivery position.

More specifically, it is preferable in a special embodiment if the horizontal moving means comprise a portal, along a girder of which the vertical moving means are movable, which girder extends over the conveying paths of a number of distribution conveyor subsystems.

A very effective embodiment is obtained if the girder extends transversely to the parts of the conveying paths over which the girder extends.

To prevent a situation in which the possible transfer of a loaded tray from one distribution conveyor subsystem to another takes place at the expense of the transport on said one distribution conveyor subsystem of loaded trays located upstream thereof, it is advantageous if at least some of the distribution conveyor subsystems comprises a branch, on which branch at least one pickup position forming part of the associated distribution conveyor subsystem is provided. A loaded tray to be transferred can thus be temporarily positioned at a pickup position at the location of the branch until the transfer means become available, whilst in the meantime other loaded trays located upstream thereof can be supplied to one of the associated lifts from a transfer station by the distribution conveyor subsystem in question without any interference.

According to another preferred embodiment, the system comprises one transfer device for each distribution conveyor subsystem, which makes the system easier to control.

Quite preferably, the system comprises at least one pallet warehouse for pallets on which products are stacked in a number of layers. Such pallets can thus be supplied to a transfer device, which transfers the products present on the pallets to a number of trays, on which trays the products are provided in only one layer. Typically, the products of one pallet are distributed over six to seven trays.

According to the invention the distribution conveyor subsystems comprise a buffer conveyor system, which buffer conveyor system comprises an endless sub-conveying path, as well as a supply conveyor system for supplying loaded trays from a transfer device to an associated buffer conveyor system. The use of a buffer conveyor system makes enables a loaded tray to pass all the racks associated with the distribution conveyor subsystem in question without being transferred to an associated lift in case, for example, no tray storage positions are available (temporarily) in the racks in question. When the loaded tray follows the endless sub-conveying path, the tray will pass the short ends of the racks in question once again, so that transfer can take place at a suitable moment yet.

Furthermore preferably, the tray conveying system comprises a number of lift supply conveyors for each distribution conveyor subsystem for supplying loaded trays from the associated distribution conveyor subsystem to a lift. Such lift supply conveyors can also provide a temporary position for a loaded tray that is waiting for a lift that will convey the loaded tray to a tray storage position. The fact that a loaded tray is waiting for a lift does not interfere with the transport of trays on the other part of the distribution conveyor subsystem in question.

The lift supply conveyors preferably extend in line with a rack, whilst the lifts are each movable to and fro along at least one rack to a position opposite the lift supply conveyor. This makes it possible to position the racks relatively close together, resulting in an advantageous use of the available space. Between the racks, space is needed only for the lifts to move therebetween. The picking up of a loaded tray by a lift can take place at a location beyond the length of the rack with which the lift supply conveyor is positioned in line.

The flexibility of the system according to the invention is further increased if the tray conveying system comprises at least one bridge conveyor near racks for conveying trays from one distribution conveyor sub system to another distribution conveyor subsystem. When a number of buffer conveyor systems according to a previously discussed preferred embodiment is used, it is furthermore preferable if said at least one bridge conveyor extends between two adjacent buffer conveyor systems. Thus it becomes possible, upon determination by a control system - at a relatively late stage, after a loaded tray has been supplied to a distribution conveyor subsystem and the loaded tray is located relatively close to the racks - that it is nevertheless necessary to store the loaded tray at a tray storage position, to transfer the loaded tray in question yet from the original distribution conveyor subsystem to the other distribution conveyor subsystem. In particular if, according to further preferred embodiments, the tray conveying system is also used for returning empty trays from a tray storage position to a transfer device, the present preferred embodiment also provides a possibility to move a tray, which may be a partially unloaded tray, that is stored in a tray storage position of a particular rack to a tray storage position of another rack, even if said other rack belongs to another group of racks.

A high degree of flexibility is obtained in particular if the tray conveying system comprises two bridge conveyors for conveying trays from one distribution conveyor subsystem to another distribution conveyor subsystem and from said other distribution conveyor subsystem to said one distribution conveyor subsystem, respectively, wherein each of the two bridge conveyors only need to be drivable in one direction, viz. in the opposite direction of the other bridge conveyor.

The degree of automation of the system is further increased if the distribution conveyor subsystems are also designed for conveying empty trays from a tray storage position to a transfer device. At a transfer device, the empty trays can be loaded by the transfer device again and subsequently be supplied to a tray storage position again by the tray conveying system. As an aside it is noted that the tray conveying system and the lifts can be used not only for conveying loaded trays but also for conveying empty trays.

To realise an adequate discharge of empty trays from a tray storage position, it is furthermore very advantageous if the conveying path of at least one of the distribution conveyor subsystems pass the transfer means at least twice, wherein said transfer means are also arranged for transferring empty trays from one discharge conveyor to another discharge conveyor. In this way the range of applications of the transfer means is further increased. In case of an impeding shortage at a transfer device of empty trays to be loaded by the transfer device and an excess of trays at another transfer device, this situation can be solved by using the transfer means not only for transferring loaded trays from one supplier conveyor to another supply conveyor, but also for transferring empty trays from one distribution conveyor subsystem to another distribution conveyor subsystem.

When using a buffer conveyor system according to one of the preceding preferred embodiments, it is preferable if the buffer conveyor systems each comprise a discharge conveyor system for discharging empty trays from a buffer conveyor system to an associated transfer device. The advantages of using a discharge conveyor system are comparable to the advantages of using a supply conveyor system according to any one of the preceding preferred embodiments as set forth in the foregoing.

The tray conveying system for each distribution conveyor subsystem preferably comprises a number of lift discharge conveyors each for discharging empty trays from a lift to the associated distribution conveyor subsystem. The lift in question can collect empty trays from a tray storage position and subsequently deliver said trays to a further discharge conveyor, which can deliver the empty tray to the associated distribution conveyor subsystem again as soon as space is available on the distribution conveyor subsystem.

The lift discharge conveyors preferably extend in line with a rack. This makes it possible to position the racks relatively close together, resulting in an advantageous use of the available space. Between the racks, space is needed only for the lifts to move therebetween. The delivery of an empty tray by a lift can take place at a location beyond the length of the rack with which the lift supply conveyor is positioned in line.

The invention will be explained in more detail hereinafter by means of a description of a preferred embodiment of the present invention, in which reference is made to the following figures:
Figure 1 is a schematic top plan view of an embodiment of a system according to the present invention;
Figure 2 is a perspective view of the transfer means including the direct vicinity thereof as forming part of the system according to figure 1.

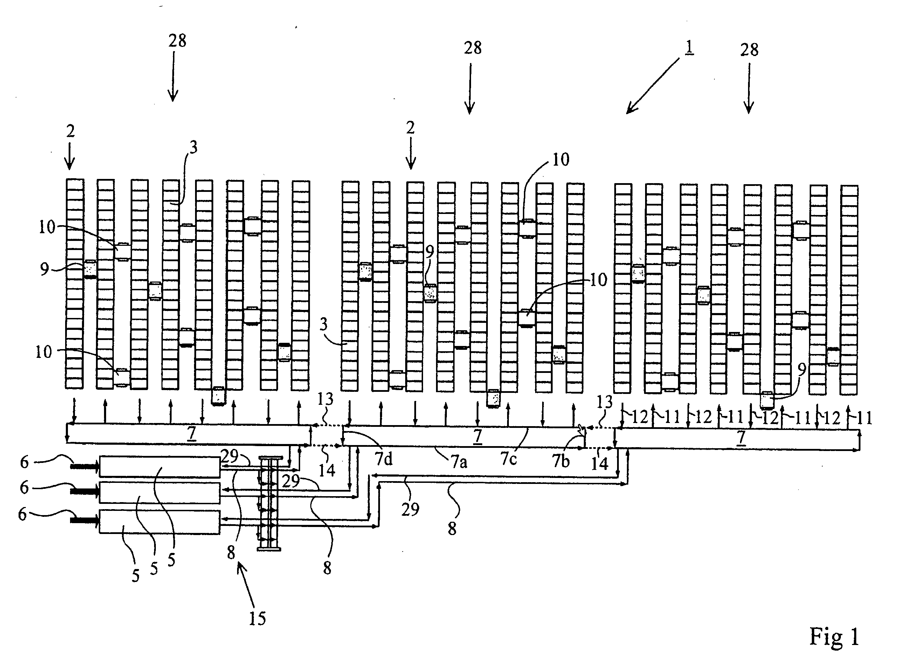

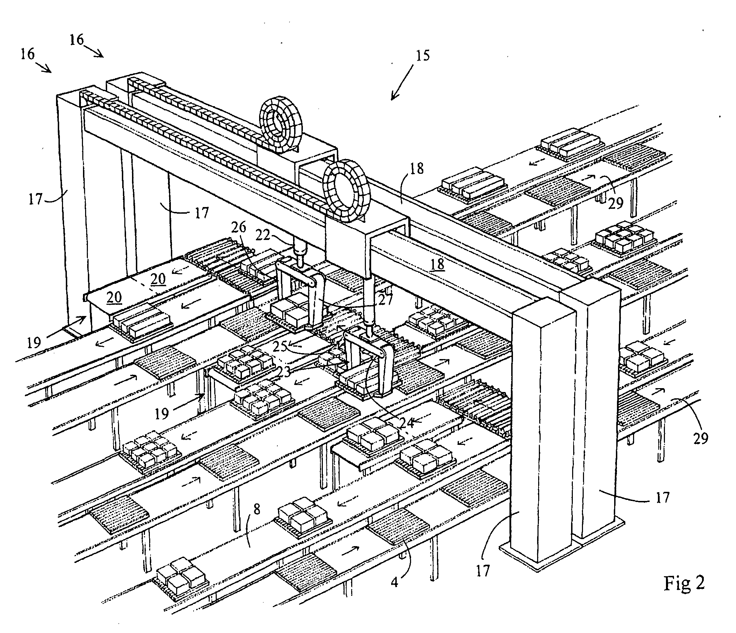

Figure 1 schematically shows in top plan view a possible system 1 according to the invention. The system 1 comprises a plurality of racks 2 extending parallel to each other, which racks each comprise a number of tray storage positions 3 disposed above and beside each other. In said tray storage positions 3, trays carrying a single layer of identical products can be temporarily stored. Said products are thus presented for being collected from various tray storage positions in accordance with corresponding orders. In the present system 1, said identical products are provided on a tray in a single layer (see also figure 2), so that the removal of one product or a number of products from the tray, which may take place in a tray storage position but also outside a tray storage position if a loaded tray is to that end temporarily removed from said tray storage position, can be done in an automated manner. As shown in figure 2, a single layer of identical products may also be made up of a single (horizontal) row of identical products.

As shown in figure 2, use is to that end made of trays 4, which each have a number of parallel, horizontal upright edges. The products are supported on the upper sides of said edges, whilst the space between the edges is available for reaching therebetween with spoons or the like, which thus gain access to the underside of (number of) product(s) present on a tray 4 for subsequently lifting the product and removing it from the tray 4. Such a tray and the manner in which it can be used is described, for example, in Dutch patent applications NL 1036522 and NL 1037378.

To obtain trays which are loaded with a single layer of identical products, the system 1 comprises three transfer devices 5. To each of the transfer devices 5, which will be referred to below as "depalletizer", pallets each carrying a number of layers of stacked, identical products are supplied, possibly from a pallet warehouse, as indicated by arrows 6. In use the depalletizers 5, which are known to the skilled person and which are also mentioned in International patent application WO 2008/089980 A1, for example, in which they are indicated at 16, remove products from a pallet and place said products on a tray, in such a manner that the products are provided on the tray in a single layer. In practice it has been found that usually about six to seven trays are required for unloading one pallet, with the dimensions of the pallet roughly corresponding to those of a tray. To enable the automated removal as described in the foregoing of a product from a tray for the purpose of collecting said product elsewhere in accordance with a corresponding order, it is preferable if the products are in any case positioned transversely to the longitudinal direction of the edges of the trays 4, spaced some distance apart.

To transport a loaded tray from one of the transfer devices 5 to one of the tray storage positions 3, the system comprises a tray conveying system. Said tray conveying system comprises three distribution conveyor subsystems, which are each capable of conveying trays, which may or may not be loaded, along a conveying path. For each of the distribution conveyor subsystems said conveying path extends along the short ends of a group 28 of eight racks. Each distribution conveyor subsystem comprises a buffer conveyor system 7, which is essentially made up of four rectilinear conveyors, which are indicated at 7a, 7b, 7c, 7d for the middle buffer conveyor system 7 in figure 1. The successive conveyors 7a-7d, which jointly define the shape of an elongate rectangle, join each other at right angles, defining an endless sub-conveying path. At the four corner points of the endless conveying path, transfer of a tray from a conveyor 7a-7d to a next conveyor 7a-7d takes place. The conveyors 7a-7d are of the roller conveyor type or of the chain conveyor type, for example.

To supply loaded trays from a depalletizer 5 to a buffer conveyor system 7, each distribution conveyor subsystem further comprises a supply conveyor 8, which supply conveyors 8 each extend from an associated depalletizer 5 and which connect to one of the three buffer conveyor system 7, more specifically to the conveyor 7a thereof.

Provided between adjacent racks 2 of a group 28 of eight racks are lifts which are movable to and fro between said racks. Two types of lifts are provided, viz. a tray lift 9 by means of which loaded trays 4 can be supplied to a tray storage position 4 and empty trays 4 can be discharged from a tray storage position 3. Four tray lifts 9 are provided for each group 28, as a result of which the tray storage positions 3 of all eight racks 2 of a group 28 can be reached directly by a tray lift 9. The tray lifts form part of the associated distribution conveyor system.

Two product lifts 10 are provided for each pair of racks between the pairs of adjacent racks 2 of each group 28 where no tray lifts 9 are present. Such product lifts 10 are capable of removing one product or a number of products from a tray 4 in a tray storage position 3 and discharge said product or products to a collecting location. This process is described in great detail in Dutch patent application NL 1037379, for example. The outermost racks 2 of a group 28 of eight racks 2 cannot be reached directly by a product lift 10, but product-carrying trays 4 present in one of the two outermost racks 2 can be conveyed to an adjacent rack 2 within the same group 28 by a tray lift 9, so that the products present on the tray 4 in question can be reached yet by one of the product lifts 10.

The number of racks 2 forming part of a group 28 is geared to the capacity of each distribution conveyor subsystem. It is important in that regard that the number of trays 4 that can be handled by a distribution conveyor subsystem per unit time is at least substantially the same as the number of trays 4 in rack positions 3 that can be fully unloaded per unit time by the product lifts 10 associated with the group 28 in question.

To enable the transfer of trays between a tray lift 9 and a buffer conveyor system 7, four lift supply conveyors 11 and four lift discharge conveyors 12 are alternately provided for each group 28 of eight racks 2, which conveyors branch from the buffer conveyor system 7, more specifically the conveyor 7c thereof, or discharge thereon, respectively. The lift supply conveyors 11 and the lift discharge conveyors 12, which form part of an associated distribution conveyor subsystem, are positioned in line with the racks 2. The tray lifts 9 can be moved to a position beyond the length of the racks 2, between pairs of adjacent lift supply conveyors 11 and lift discharge conveyors 12, so that the two tray lifts 9 can take over a loaded tray 4 from a lift supply conveyor 11 or transfer a tray, which may or may not be empty, to a lift discharge conveyor 12 at such a position.

Provided between adjacent buffer conveyor systems 7 are two bridge conveyors 13, 14, which are driven in opposite directions and by means of which the transfer of trays in two directions between two adjacent buffer conveyor systems 7 can be effected. In case of problems in a group 28 of racks 2 or at the associated lifts 9, 10, the bridge conveyors 13, 14 make it possible, for example, 4 loaded trays present on a buffer conveyor system 7 to be transferred to an adjacent buffer conveyor system 7 so as to be eventually supplied to a tray storage position 3 of a rack 2 associated with another group 28 of racks 2.

From the respective buffer conveyor systems 7, more specifically the conveyors 7a thereof, discharge conveyors 29 extend parallel to the supply conveyors 8, being driven in the opposite direction, however, toward the depalletizers 5 for discharging empty trays 4 to the depalletizers 5. At the depalletizers 5, the trays 4 are made available again for being loaded by the depalletizers 5.

For a loaded tray 4, the conveying path associated with each distribution conveyor subsystem extends along, successively, a supply conveyor 8, the buffer conveyor 7a (partially), the buffer conveyor 7b, the buffer conveyor 7c

(partially), a lift supply conveyor 11, and the path which the loaded tray 4 in the tray lift 9 covers between the lift supply conveyor 11 and a tray storage position 3, and for an empty tray said conveying path extends along, successively, the path which the empty tray covers between the tray storage position 3 and the lift discharge conveyor 12, the lift discharge conveyor 12, the buffer conveyor 7c (partially), the buffer conveyor 7d, the buffer conveyor 7a (partially) and the discharge conveyor 29.

The system 1 further comprises transfer means 15, in connection with which reference is made in particular to figure 2. The transfer means 15 comprise two portals 16, each having two columns 17 and a girder 18 that extends between the upper ends of the associated columns 17. The girders 18 each extend over the three supply conveyors 8 and the three discharge conveyors 29, which extend parallel to each other also at the location of the transfer means 15. At the location of the portals 16, each of the supply conveyors 8 is provided with a branch 19, each branch comprising two pickup positions 20 located one behind the other. The pickup positions 20 are located directly below the respective girders 18 of the two portals 16. Using conveying techniques that are known per se to those skilled in the art, the trays 8 can first be discharged in a direction transversely to the main conveying direction of the associated supply conveyor 8 at the location of the branches 19 and subsequently in a direction parallel thereto to be eventually placed at one of the two pickup positions 20.

Slides 21 are movable to and fro along the girders 18 of the portals 16 in directions perpendicular to the main conveying directions of the supply conveyors 8 and the discharge conveyors 29 extending therebelow. The slides 21 each carry a downwardly extending lifting cylinder 22. Provided on the lower end of the piston rod of the lifting cylinder is 22 is a gripping element 23, each gripping element comprising gripping arms 26, 27 which can pivot toward and away from each other about pivot axes 24, 25. The gripping element 23 is capable of engaging a tray 4 on two opposite sides thereof, whereupon the tray 4 can be moved upward and downward by the action of the lifting cylinders 22.

In use it may be desirable not to supply a tray 4 that has been loaded by a particular depalletizer 5 to a tray storage position of a rack 2 associated with a group 28 of racks 2 along the short end of which the buffer conveyor system 7 to which the supply conveyor 8 that starts at the depalletizer 5 extends, but to supply said tray to a tray storage position 3 associated with another group 28. The transfer means 5 can be very usefully utilised for that purpose by moving the loaded tray 4 in question from one supply conveyor 8 to the (other) supply conveyor 8 that connects to the buffer conveyor system 7 associated with the group 28 in question. The tray in question is to that end picked up from a pickup position 20 of a supply conveyor 8 by successively engaging the tray by means of a gripping element 23, retracting the lifting cylinder 22, moving the slide 21 along the associated girder 18 to a position above the desired supply conveyor 8, and extending the lifting cylinder 22 at that location so as to subsequently release the engagement by the gripper 25 as soon as the tray is supported on the other buffer conveyor system 7. It stands to reason that space must be available on the supply conveyor 8 in order to realise this.

In a comparable manner it is also possible to use the transfer means 15 for transferring empty trays 4 from one discharge conveyor 29 to another discharge conveyor 29.

## Claims

1. A system (1) for distributing products, which system comprises a plurality of racks (2) with tray storage positions (3) disposed above and beside each other for the temporary storage of trays (4) carrying a single layer of products, a number of transfer devices (5) for unloading pallets and loading trays (4) in a single layer, and a tray conveying system for conveying trays (4) loaded by a transfer device (5) to a tray storage position (3), which tray conveying system comprises a number of lifts (9, 10), **characterised in that** the tray conveying system comprises a number of distribution conveyor subsystems each comprising a supply conveyor (8) and a buffer conveyor system (7) comprising an endless subconveying path, the supply conveyor (8) extending from an associated transfer device (5) and connecting to the buffer conveyor system (7), the buffer conveyor systems (7) each define a conveying path that extends along short ends disposed beside each other of a group of a number of racks disposed adjacent to each other, as well as transfer means (15) for transferring loaded strays from a pickup position (20) of the supply conveyor (8) of a distribution conveyor subsystem to a delivery position (20) of the supply conveyor (8) of another distribution conveyor subsystem.

2. A system according to claim 1, **characterised in that** the transfer means comprise vertical moving means (22) for moving a loaded tray upward from a pickup position and for moving the loaded tray downward at a delivery position.

3. A system according to claim 2, **characterised in that** the transfer means (15) comprise horizontal moving means for moving the vertical moving means in horizontal direction from a position above a pickup position (20) to a position above a delivery position (20).

4. A system according to claims 2 and 3, **characterised in that** the horizontal moving means comprise a portal (16) along a girder (10) of which the vertical moving means (22) are movable, which girder (10) extends over the conveying paths of a number of distribution conveyor subsystems.

5. A system according to any one of the preceding claims, **characterised in that** at least some of the distribution conveyor subsystems comprise a branch (19), on which branch (19) at least one pickup position (20) forming part of the associated distribution conveyor subsystem is provided.

6. A system according to any one of the preceding claims, **characterised in that** the system comprises a transfer device (15) for each distribution conveyor subsystem.

7. A system according to any one of the preceding claims, **characterised in that** the system comprises at least one pallet warehouse (16) for pallets on which products are stacked in a number of layers.

8. A system according to any one of the preceding claims, **characterised in that** the tray conveying system comprises a number of lift supply conveyors (11) for each distribution conveyor subsystem for supplying loaded trays (4) from the associated distribution conveyor subsystem to a lift (9, 10).

9. A system according to any one of the preceding claims, **characterised in that** the tray conveying system comprises at least one bridge conveyor (13, 14) near racks (2) for conveying trays (4) from one distribution conveyor subsystem to another distribution conveyor subsystem.

10. A system according to claim 9, **characterised in that** the tray conveying system comprises two bridge conveyors (13, 14) for conveying trays from one distribution conveyor subsystem to another distribution conveyor subsystem and from said other distribution conveyor subsystem to said one distribution conveyor subsystem, respectively.

11. A system according to any one of the preceding claims, **characterised in that** the distribution conveyor subsystems are also designed for conveying empty trays from a tray storage position (6) to a transfer device (15).

12. A system according to claim 11, **characterised in that** the conveying path of at least one of the distribution conveyor subsystems pass the transfer means at least twice, wherein said transfer means (15) are also arranged for transferring empty trays from one discharge conveyor to another discharge conveyor.

13. A system according to claim 11 or 12, **characterised in that** the buffer conveyor systems (7) eacn comprise a discharge conveyor system (29) for discharging empty trays (4) from a buffer conveyor system to an associated transfer device (15).

14. A system according to claim 11, 12 or 13, **characterised in that** the tray conveying system for each distribution conveyor subsystem comprise a number of lift discharge conveyors (12) each for discharging empty trays (4) from a lift (9, 10) to the associated distribution conveyor subsystem, wherein preferably the lift discharge conveyors extend in line with a rack (2), and wherein the lifts (9, 10) are each movable to and fro along at least one rack (2) to a position opposite the lift discharge conveyor (12).

## Patentansprüche

1. System (1) zur Verteilung von Produkten, mit einer Mehrzahl von Regalen (2) mit über- und nebeneinander angeordneten Tablettlagerungspositionen (3) zur vorübergehenden Lagerung von Tabletts (4), die eine einzelne Lage von Produkten tragen, mehreren Umladevorrichtungen (5) zum Entladen von Paletten und Beladen von Tabletts (4) in einer einzelnen Lage und einem Tablettfördersystem zur Förderung von von einer Umladevorrichtung (5) beladenen Tabletts (4) zu einer Tablettlagerungsposition (3), wobei das Tablettfördersystem mehrere Lifte (9, 10) aufweist, **dadurch gekennzeichnet, dass** das Tablettfördersystem mehrere Verteilungsförderuntersysteme, die jeweils ein Zuführförderband (8) und ein Pufferfördersystem (7) mit einem Endlosunterförderweg aufweist, wobei das Zuführförderband (8) von einer Umladevorrichtung (5) sich erstreckt und am Pufferfördersystem (7) anschließt, wobei die Pufferfördersystemen (7), jedes einen Förderweg definiert, der sich entlang kurzer, nebeneinander angeordneter Enden einer Gruppe von mehreren aneinander angrenzend angeordneten Regalen erstreckt, sowie Umlademittel (15) zur Überführung beladener Tabletts von einer Aufnahmeposition (20) eines Zuführförderbands (8) eines Verteilungsförderuntersystems zu einer Lieferposition (20) eines Zuführförderbands (8) eines anderen Verteilungsförderuntersystems aufweist.

2. System nach Anspruch 1, **dadurch gekennzeichnet, dass** die Umlademittel Vertikalbewegungsmittel (22) aufweisen, um ein beladenes Tablett von einer Aufnahmeposition aufwärts zu bewegen und um das beladene Tablett an einer Lieferposition abwärts zu bewegen.

3. System nach Anspruch 2, **dadurch gekennzeichnet, dass** die Umlademittel (15) Horizontalbewegungsmittel aufweisen, um die Vertikalbewegungsmittel in horizontaler Richtung von einer Position oberhalb einer Aufnahmeposition (20) zu einer Position oberhalb einer Lieferposition (20) zu bewegen.

4. System nach den Ansprüchen 2 und 3, **dadurch gekennzeichnet, dass** die Horizontalbewegungsmittel einen Portalrahmen (16) entlang eines Trägers (18), dessen Vertikalbewegungsmittel (22) bewegbar sind, aufweisen, wobei sich der Träger (18) über die Förderwege mehrerer Verteilungsförderuntersysteme erstreckt.

5. System nach einem der vorhergehenden Ansprüche, **dadurch gekennzeichnet, dass** wenigstens einige der Verteilungsförderuntersysteme einen Zweig (19) aufweisen, auf dem wenigstens eine Aufnahmeposition (20) vorgesehen ist, die einen Teil des zugeordneten Verteilungsförderuntersystems bildet.

6. System nach einem der vorhergehenden Ansprüche, **dadurch gekennzeichnet, dass** das System eine Umladevorrichtung (15) für jedes Verteilungsförderuntersystem aufweist.

7. System nach einem der vorhergehenden Ansprüche, **dadurch gekennzeichnet, dass** das System wenigstens ein Palettenlager (16) für Paletten aufweist, auf denen Produkte in mehreren Lagen gestapelt sind.

8. System nach einem der vorhergehenden Ansprüche, **dadurch gekennzeichnet, dass** das Tablettfördersystem mehrere Liftzuführförderer (11) für jedes Verteilungsförderuntersystem aufweist, um beladene Tabletts (4) von dem zugeordneten Verteilungsförderuntersystem einem Lift (9, 10) zuzuführen.

9. System nach einem der vorhergehenden Ansprüche, **dadurch gekennzeichnet, dass** das Tablettfördersystem wenigstens einen Brückenförderer (13, 14) in der Nähe von Regalen (2) aufweist, um Tabletts (4) von einem Verteilungsförderuntersystem zu einem anderen Verteilungsförderuntersystem zu fördern.

10. System nach Anspruch 9, **dadurch gekennzeichnet, dass** das Tablettfördersystem zwei Brückenförderer (13, 14) aufweist, um Tabletts von einem Verteilungsförderuntersystem zu einem anderen Verteilungsförderuntersystem bzw. von dem anderen Verteilungsförderuntersystem zu dem einen Verteilungsförderuntersystem zu fördern.

11. System nach einem der vorhergehenden Ansprüche, **dadurch gekennzeichnet, dass** die Verteilungsförderuntersysteme auch dafür ausgelegt sind, leere Tabletts von einer Tablettlagerungsposition (6) zu einer Umladevorrichtung (15) zu fördern.

12. System nach Anspruch 11, **dadurch gekennzeichnet, dass** der Förderweg wenigstens eines der Verteilungsförderuntersysteme die Umlademittel wenigstens zweimal passiert, wobei die Umlademittel (15) auch so angeordnet sind, dass sie leere Tabletts von einem Entladeförderer zu einem anderen Entladeförderer überführen.

13. System nach Anspruch 11 oder 12, **dadurch gekennzeichnet, dass** die Pufferfördersysteme (7) jeweils ein Entladungsfördersystem (29) aufweisen, um leere Tabletts (4) von einem Pufferfördersystem zu einer zugeordneten Umladevorrichtung (15) zu entladen.

14. System nach Anspruch 11, 12 oder 13, **dadurch gekennzeichnet, dass** das Tablettfördersystem für jedes Verteilungsförderuntersystem jeweils mehrere Liftentladungsförderer (12) aufweist, um leere Tabletts (4) aus einem Lift (9, 10) zu dem zugehörigen Verteilungsförderuntersystem zu entladen, wobei sich vorzugsweise die Liftentladungsförderer in einer Linie mit einem Regal (2) erstrecken, und wobei die Lifte (9, 10) jeweils entlang wenigstens eines Regals (2) zu einer Position gegenüber dem Liftentladungsförderer (12) hin und her beweglich sind.

## Revendications

1. Système (1) pour distribuer des produits, lequel système comprend une pluralité de grilles (2) avec des positions de stockage de plateaux (3) disposés au-dessus et les uns à côté des autres pour le stockage temporaire des plateaux (4) supportant une seule couche de produits, un certain nombre de dispositifs de transfert (5) pour décharger des palettes et charger des plateaux (4) sur une seule couche, et un système de transport de plateaux pour transporter des plateaux (4) chargés par un dispositif de transfert (5) jusqu'à une position de stockage de plateaux (3), lequel système de transport de plateaux comprend un certain nombre de dispositifs de levage (9, 10) **caractérisé en ce que** le système de transport de plateaux comprend un certain nombre de soussystèmes de transporteur de distribution, chacun comprenant un transporteur d'alimentation (8) et un système de transporteur tampon (7) qui comprend une trajectoire de soustransport sans fin, dans lequel le transporteur d'alimentation (8) s'étend à partir d'un dispositif de transfert associé (5) et se connecte au système de transporteur tampon (7), dans lequel les systèmes de transporteur tampon (7) définissent chacun une trajectoire de transport qui s'étend le long de courtes extrémités disposées les unes à côté des autres d'un groupe d'un certain nombre de grilles disposées de manière adjacente les unes par rapport aux autres, ainsi que des moyens de transfert (15) pour transférer des plateaux chargés d'une position de prélèvement (20) du transporteur d'alimentation (8) d'un sous-système de transporteur de distribution à une position de distribution (20) du transporteur d'alimentation (8) d'un autre sous-système de transporteur de distribution.

2. Système selon la revendication 1, **caractérisé en ce que** les moyens de transfert comprennent des moyens de déplacement verticaux (22) pour déplacer un plateau chargé vers le haut à partir d'une position de prélèvement et pour déplacer le plateau chargé vers le bas dans une position de distribution.

3. Système selon la revendication 2, **caractérisé en ce que** les moyens de transfert (15) comprennent des moyens de déplacement horizontaux pour déplacer les moyens de déplacement verticaux dans la direction horizontale à partir d'une position située au-dessus d'une position de prélèvement (20) jusqu'à une position située au-dessus d'une position de distribution (20).

4. Système selon les revendications 2 et 3, **caractérisé en ce que** les moyens de déplacement horizontaux comprennent une porte (16) le long d'une poutre (18) dont les moyens de déplacement verticaux (22) sont mobiles, laquelle poutre (18) s'étend sur les trajectoires de transport d'un certain nombre de sous-systèmes de transporteur de distribution.

5. Système selon l'une quelconque des revendications précédentes, **caractérise en ce qu'**au moins certains des soussystèmes de transporteur de distribution comprennent une branche (19), sur laquelle branche (19), on prévoit au moins une position de prélèvement (20) faisant partie du soussystème de transporteur de distribution associé.

6. Système selon l'une quelconque des revendications précédentes, **caractérisé en ce que** le système comprend un dispositif de transfert (15) pour chaque sous-système de transporteur de distribution.

7. Système selon l'une quelconque des revendications précédentes, **caractérisé en ce que** le système comprend au moins un entrepôt de palettes (16) pour des palettes sur lesquelles des produits sont empilés sur un certain nombre de couches.

8. Système selon l'une quelconque des revendications précédentes, **caractérisé en ce que** le système de transport de plateaux comprend un certain nombre de transporteurs d'alimentation de dispositif de levage (11) pour chaque sous-système de transporteur de distribution pour amener les plateaux chargés (4) du sous-système de transporteur de distribution associé àun dispositif de levage (9, 10).

9. Système selon l'une quelconque des revendications précédentes, **caractérisé en ce que** le système de transport de plateaux comprend au moins un transporteur intermédiaire (13, 14) àproximité des grilles (2) pour transporter des plateaux (4) d'un sous-système de transporteur de distribution à un autre sous-système de transporteur de distribution.

10. Système selon la revendication 9, **caractérisé en ce que** le système de transport de plateaux comprend deux transporteurs intermédiaires (13, 14) pour transporter des plateaux d'un sous-système de transporteur de distribution à un autre sous-système de transporteur de distribution et dudit autre sous-système de transporteur de distribution audit un sous-système de transporteur de distribution, respectivement.

11. Système selon l'une quelconque des revendications précédentes, **caractérisé en ce que** les sous-systèmes de transporteur de distribution sont également conçus pour transporter des plateaux vides d'une position de stockage de plateaux (16) jusqu'à un dispositif de transfert (15).

12. Système selon la revendication 11, **caractérisé en ce que** la trajectoire de transport d'au moins l'un des soussystèmes de transporteur de distribution passe par les moyens de transfert au moins deux fois, dans lequel lesdits moyens de transfert (15) sont également agences pour transférer des plateaux vides d'un transporteur de décharge àun autre transporteur de décharge.

13. Système selon la revendication 8 et selon la revendication 11 ou 12, **caractérisé en ce que** les systèmes de transporteur tampon (7) comprennent chacun un système de transporteur de décharge (29) pour décharger des plateaux vides (4) d'un système de transporteur tampon àun dispositif de transfert (15) associé.

14. Système selon la revendication 11, 12 ou 13, **caractérisé en ce que** le système de transport de plateaux pour chaque sous-système de transporteur de distribution comprend un certain nombre de transporteurs de décharge à dispositif de levage (12), chacun prévu pour décharger des plateaux vides (4) d'un dispositif de levage (9, 10) à un sous-système de transporteur de distribution associé, dans lequel de préférence, les transporteurs de décharge à dispositif de levage s'étendent en ligne avec une grille (2), et dans lequel les dispositifs de levage (9, 10) sont chacun mobiles selon un mouvement de va-et-vient le long d'au moins une grille (2) jusqu'à une position opposée au transporteur de décharge àdispositif de levage (12).
